# EUROPÄISCHE PATENTSCHRIFT

(11) **EP 1 045 242 B1**
(45) Veröffentlichungstag und Bekanntmachung des Hinweises auf die Patenterteilung: **14.06.2006**
(21) Anmeldenummer: 00250122.9
(22) Anmeldetag: 12.04.2000
(51) Int. Cl.: G01N 15/02

(54) **Verfahren und Vorrichtung zur grössenaufgelösten chemischen und physikalischen Bestimmung von Aerosolpartikeln**
Process and device for sizeresolved chemical and physical determination of aerosol particles
Procédé et dispositif d'analyse des particules aérosols par voie chimique ou physique sélectionnées selon leur taille

(30) Priorität: 15.04.1999 DE 19917933
(43) Veröffentlichungstag der Anmeldung: 18.10.2000
(73) Patentinhaber: Bruker Daltonik GmbH, 28359 Bremen (DE)
(72) Erfinder: Stratmann, Frank Dr., 04317 Leipzig (DE); Sierau, Berko, 04107 Leipzig (DE); Heintzenberg, Jost Prof.Dr., 04107 Leipzig (DE); Pelzing, Matthias Dr., 04275 Leipzig (DE)
(74) Vertreter: Ziebig, Marlene

(56) Entgegenhaltungen:
- DE-A- 3 111 322
- DE-A- 3 413 426
- US-A- 5 621 208
- NOBLE C A ET AL: "REAL-TIME MEASUREMENT OF CORRELATED SIZE AND COMPOSITION PROFILES OF INDIVIDUAL ATMOSHPERIC AEROSOL PARTICLES" ENVIRONMENTAL SCIENCE AND TECHNOLOGY, AMERICAN CHEMICAL SOCIETY. EASTON, PA, US, Bd. 30, 1996, Seiten 2667-2680, XP000907632 ISSN: 0013-936X

## Beschreibung

Die Erfindung betrifft ein Verfahren und eine Vorrichtung zur größenaufgelösten chemischen und physikalischen Bestimmung von Aerosolpartikeln gemäß den Ansprüchen 1 und 7.

Aerosolpartikel spielen einerseits als unerwünschte Nebenprodukte von zum Beispiel Verbrennungsprozessen und andererseits als gewünschte Produkte, zum Beispiel bei der Herstellung von Farbstoffen, Pharmazeutika oder Glasfasern, eine wichtige Rolle in Industrie und Technik.

Aerosolpartikel können des weiteren vielfältige Auswirkungen auf die Gesundheit des Menschen, auf Spurenstoffkreisläufe in der Atmosphäre und das Klima haben.

Sowohl unter dem Gesichtspunkt einer optimierten Prozeßführung als auch hinsichtlich der gesundheitlichen und atmosphärischen Relevanz ist die Kenntnis der physikalischen und chemischen Eigenschaften der Aerosolpartikel von großer Bedeutung.

Partikel im submikronen Größenbereich sind einer physikalischen und insbesondere einer chemischen Analyse schwer zugänglich. Eine genaue chemische Charakterisierung, setzt eine genügend große Probenmenge voraus, was bei kleinen Partikeln zu langen Probenahmezeiten führen kann. Die Folgen von zu langen Probenahmezeiten können die Bildung von Artefakten sein, zum Beispiel der Verlust flüchtiger Verbindungen, es können chemische Umwandlungsprozesse, die Adsorption gasförmiger Verbindungen auf der Partikeloberfläche bzw. auf dem Probenträger (Filter, Impaktorstufe) sowie eine Kontamination der Probe auftreten.

Zur chemischen Echtzeit-Charakterisierung, zum Beispiel von atmosphärischen, Produkt- oder von im Labor erzeugten Aerosolpartikeln, sind zwei Techniken bekannt.

In der Publikation von Noble, C.A. and Prather, K.A., 1996, "Real-time measurements of correlated size and composition profiles of individual atmospheric aerosol particles", Env.Sci.And Tech. 30, 2667-2680, und im US 56 81 752 wird die Laser-Flugzeit-Massenspektrometrie beschrieben, bei der die Partikel über ein spezielles Röhrensystem in eine Vakuumkammer gelangen, wo sie durch einen niederenergetischen Laser erfaßt und ihre Größe durch Lichtstreuung vermessen wird. Das gestreute Laserlicht triggert einen UV-Laser, der zur Verdampfung/Ionisation der zu untersuchenden Partikel dient. Die ionisierten Teilchen werden in einem Flugzeitmassenspektrometer massenselektiert und detektiert, wobei das Ergebnis, ein nach Massen aufgelöstes Spektrum, die Identifizierung von Elementen oder Verbindungen der Ausgangsaerosolpartikel erlaubt.

Das beschriebene System von K.A.Prather ist ein Verfahren und eine Vorrichtung zur größenaufgelösten chemischen und physikalischen Charakterisierung von Aerosolpartikeln in Echtzeit, bei dem eine Einzelpartikelanalyse erfolgt, d.h., nur jeweils ein einzelnes Partikel bzw. dessen chemischen Bestandteile können ionisiert und anschließend dem Massenspektro-meter zur Analyse zugeführt werden. Mit der bei diesem Verfahren verwendeten Ionisationsmethode gehen wichtige Informationen über die Ausgangssubstanzen und ihre Molekülstruktur verloren, da nur wenige Prozente der Bestandteile auf der Partikeloberfläche ionisiert wer-den. Größere Molekülverbände, z.B. längerkettige Orga-nika, werden bei der Ionisation in Tochterionen aufge-spalten, die keine Rückschlüsse mehr auf das Mutterion zulassen. Somit können viele atmosphärenrelevante Verbindungen nicht eindeutig identifiziert werden.

Die Bestimmung der Partikelgröße wird durch das optische Verfahren auf ca. 200 nm nach unten beschränkt.

Nach dem zweiten bekannten Verfahren werden die volatilen Komponenten der Aerosolpartikel durch Ver-dampfen in die Gasphase überführt, indem das Aerosol zum Beispiel durch ein beheizbares Strömungssystem geführt wird (Curtius et al.,1998, "First direct sulfuric acid detection in the exhaust plume of a jet aircraft in flight", Geophys.Res.Lett. 25, 923-926). Die entstandenen Spurengase werden dann wiederum mittels einer speziellen massenspektroskopischen Methode (Ionen-Molekül-Reaktions-Massenspektrometrie, Arnold and Hauck, 1985, "Lower stratospheric trace gas detection using aircraft chemical ionization mass spectrometry", Nature 315, 307-309) untersucht. Dieses Verfahren setzt die Kenntnis der Verdampfungstemperatur der volatilen Bestandteile der Aerosolpartikel voraus. Mehrkomponentensysteme lassen sich nur schwer in ihre Einzelkomponenten zerlegen, wenn die Verdampfungs-temperaturen der zu trennenden Substanzen zu nahe beieinander liegen bzw., wenn sich durch das Erhitzen die chemischen und physikalischen Eigenschaften der Ausgangssubstanzen verändern. Thermisch labile Kompo-nenten werden bei hohen Temperaturen zerstört. Zum Beispiel können verschiedene Organika nach dem Aus-dampfen aus den Partikeln in der Gasphase nicht mehr unterschieden werden, sind demnach massenspektro-metrisch auch nicht mehr differenzierbar. Das System ist ohne vorgeschalteten Größenfilter vollkommen unspe-zifisch bezüglich des Partikeldurchmessers. Die Autoren weisen des weiteren auf die nicht bekannten Diffu-sionsverluste insbesondere der feinen Partikel, aber auch der größeren Partikel, innerhalb des Systems hin.

Die bekannten Verfahren sind nicht in der Lage, Partikel < 200 nm größenselektiert physikalisch und chemisch in Echtzeit zu charakterisieren.

Es sind Verfahren bekannt, bei denen luftgetragene Partikel nach erfolgter Größenselektion mittels eines Differentiellen Mobilitätsanalysators (DMA) über ein Sättiger/Kondensator-System vergrößert und anschließend einer weiteren Verwendung zugeführt werden. Hierbei arbeitet die Anordnung DMA-Sättiger/Kondensator jeweils als ein Teil eines in der Literatur als DMPS bezeichneten Systems (Differential Particle Sizer System, Fissan et al. (1983)J.Aerosol Sci.14,354-357) zur Bestimmung der Partikelgrößenanzahlverteilung, wobei das Sättiger/Kondensator-System Bestandteil eines Meßgerätes zur Zählung der Partikelanzahl ist (Condensation Particle Counter, Agarwal and Sem (1980) J.Aerosol Sci. 11, 343-357).

Aus der WO 99/17096 A1 ist ein Verfahren zur Detektion, Identifikation und Aufzeichnung von Submikrometerpartikeln bekannt, wobei die Detektion bzw. Identifikation ausschließlich auf den physikalischen Eigenschaften Dichte und Größe basiert und auf Viren und Prionen, die eine eindeutige Größe zu Dichte Beziehung aufweisen, spezialisiert ist. Das Verfahren beinhaltet kein chemisches Analyseverfahren und arbeitet nicht größenaufgelöst hinsichtlich der Partikelsammlung, da es die zu untersuchenden Partikel aus polydispersem Aerosol in der flüssigen Phase konditioniert und ihnen erst in der konditionierten Phase eine Größe mittels des oben beschriebenen DMPS-Systems zuordnet. Die Konditionierung schließt eine Detektion vieler Substanzklassen, z.B. organische Säuren, aus.

Aus der DE 31 11 322 A1 sind eine Einrichtung und ein Verfahren zur Messung der Anzahl ultrakleiner, in Luft schwebender Teilchen bekannt, welche jedoch nur der Partikelzählung bzw. in Verbindung mit einem vorgeschalteten DMA oder einer vorgeschalteten Diffusionsbatterie zur Bestimmung der Anzahlgrößenverteilung dienen. Es werden keine größenselektierten Partikel chemisch charakterisiert.

US 5,621,208 beschreibt ein Verfahren, bei dem größenselektierte Aerosol-Partikel mit dem Dampf einer Arbeitsflüssigkeit gesättigt werden und anschließend eine Kondensation der gasförmigen (verdampften) Arbeitsflüssigkeit auf den Aerosol-Partikeln erfolgt, wodurch die (nach wie vor in einem Trägergas befindlichen) Aerosol-Partikel vergrößert werden.Weiterhin werden die vergrößerten Aerosol-Partikel mittels eines optischen Systems gezählt, was eine quantitative Analysemöglichkeit ermöglicht. Eine qualitative Analysemöglichkeit besteht jedoch nicht. Vielmehr werden die im Trägergas befindlichen, gezählten Partikel über eine Pumpe und einen Filter in das System zurück geführt.

DE 34 13 426 A beschreibt ein Verfahren zur Bestimmung der Oberflächenbeschaffenheit von Aerosol-Partikeln durch Vergleich ihres elektrischen Mobilitätsdurchmessers mit dem sog. Kelvin-Äquivalentdurchmesser.

US 4,868,398 beschreibt eine Echtzeit-Analyse für Aerosol-Partikel in einem Gas, bei dem die Abscheidung der durch Anlagerung von Flüssigkeitstropfen vergrößerten Aerosol-Partikel auf einem Sammelmedium und die anschließende Analyse der abgeschiedenen Flüssigkeit vorgenommen wird. Jedoch ist dem dort offenbarten Verfahren weder eine Selektion der zu analysierenden Aerosolpartikel nach ihrer Größe noch die Trennung der abgeschiedenen Aerosolpartikel mittels eines chromatographischen Verfahrens zu entnehmen.

Aufgabe der Erfindung ist es, ein gattungsgemäßes Verfahren und eine Vorrichtung zu entwickeln, mit denen gewährleistet ist, daß auch kleine Partikel unter 200 nm in Echtzeit bzw. quasi-Echtzeit größenselektiert und weitgehend artefaktfreiqualitativ, also chemisch und/oder physikalisch charakterisiert werden können.

Die Aufgabe der Erfindung wird durch ein Verfahren gemäß Anspruch 1 und eine Vorrichtung gemäß Anspruch 7 gelöst.

Nach dem erfindungsgemäßen Verfahren werden die zu analysierenden Aerosolpartikelnach ihrer Größe mittels einer geeigneten Vorrichtung selektiert, nachfolgend werden die selektierten Aerosolpartikel, im luftgetragenen Zustand vergrößert, wobei ein Trägergas des vorliegenden quasi-monodispersen Aerosols in einem Sättiger mit dem Dampf einer für die anschließende Analyse geeigneten Arbeitsflüssigkeit gesättigt und nachfolgend in einer Kondensationskammer übersättigt wird, was zur Kondensation der Arbeitsflüssigkeit auf den Aerosolpartikeln und damit zum Anwachsen der Partikel führt, nachfolgend werden die vergrößerten Aerosolpartikel in die flüssige Phase überführt, und nachfolgend wird eine Analyse chemischer und/oder physikalischer Eigenschaften der abgeschiedenen Aerosolpartikel mittels einer chromatographischen Trenneinheit und eines Detektors durchgeführt.

Das Verfahren gewährleistet durch die Überführung von Aerosolpartikeln wahlweise definierter oder auch undefinierter Größe aus dem luftgetragenen in einen flüssigkeitsgetragenen und/oder gelösten Zustand mit der Bestimmung der Partikeleigenschaften in Echtzeit die Minimierung der Artefaktbildung, die chemische und/oder physikalische Charakterisierung von Aerosol-partikeln im nm- bis zum µm-Bereich mit guter Zeitauflösung.

Sind die Partikel in der Arbeitsflüssigkeit löslich, dann formen sich Tropfen aus der Arbeitsflüssigkeit, die die gelösten Substanzen beinhalten. In der Arbeitsflüssigkeit unlösliche Partikel werden mit der Arbeitsflüssigkeit beschichtet. Diese Eigenschaft wird gezielt zur Herstellung von Aerosolen oder nach Einbringung in die flüssige Phase zur Herstellung von Lösungen, bestehend aus Arbeitsflüssigkeit und gelösten Partikeln, sowie von Hydrosolen mit gewünschten, definierten Eigenschaften ausgenutzt.

Die Analysevorrichtung ist je nach Aufgabenstellung frei wählbar bzw. anpaßbar. Es können kommerziell erhältliche Geräte verwendet werden.

Die erfindungsgemäße Vorrichtung weist auf: eine Vorrichtung zur Selektierung der Partikelgröße der Aerosolpartikel, einen Sättiger zur Anreicherung des Trägergases mit einer Arbeitsflüssigkeit, der mit der Vorrichtung zur Selektierung der Partikelgröße verbunden ist, eine mit dem Sättiger verbundene Kondensationskammer zur Kondensation der Arbeitsflüssigkeit auf die Aerosolpartikel zum Anwachsen der Aerosolpartikel, eine Vorrichtung zum Übergang der angewachsenen Aerosolpartikel in die flüssige Phase, und eine Analysevorrichtung zur chemischen und/oder physikalichen Analyse der abgeschiedenen Aerosolpartikel mit einer chromatographischen Trenneinheit und einem Detektor.

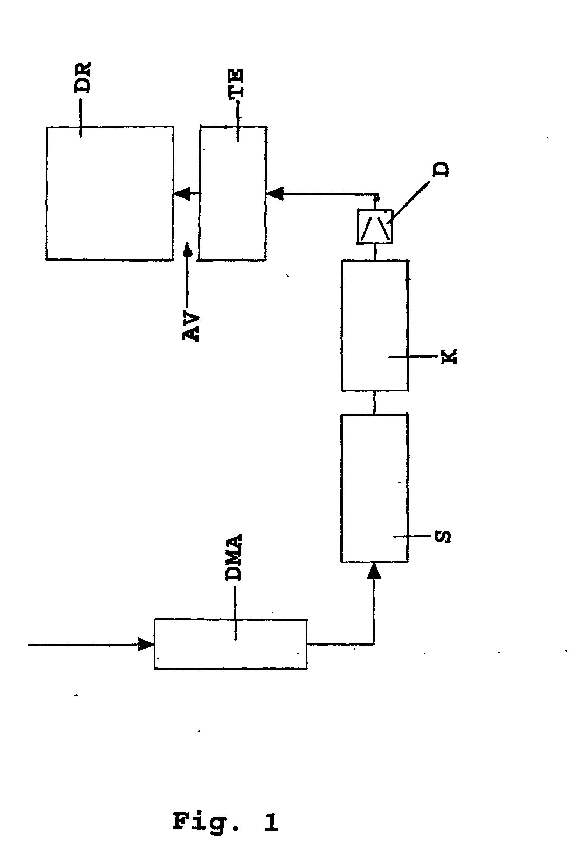

Die Erfindung wird nachfolgend anhand einer einzigen Figur in einem Ausführungsbeispiel einer chemischen Analyse von organischen Aerosolpartikeln näher erläutert.

Die Figur zeigt in einer schematischen Darstellung die wichtigsten Komponenten einer Vorrichtung zur Durchführung des Verfahrens nach der Erfindung.

Die Vorrichtung besteht im wesentlichen aus der Zusammenschaltung eines Differentiellen Mobilitätsanalysators DMA, mit einem Sättiger S, einer Kondensationskammer K, einer Vorrichtung D zur Einbringung der angewachsenen Aerosolpartikel in eine Analysevorrichtung AV, bestehend aus einer Trenneinheit TE und einem Detektor DR.

Das Verfahren nach der Erfindung gliedert sich in drei Teilabschnitte.

Im ersten Abschnitt erfolgt die Selektierung der zu a-analysierenden Aerosolpartikelgrößen in beispielsweise einem bekannten Differentiellen Mobilitätsanalysator DMA. Aus dem zu analysierenden Aerosol wird so eine quasi-monodisperse Partikelfraktion, beispielsweise mit mittlerem Durchmesser 50 nm, entnommen.

In einem zweiten Abschnitt des Verfahrens wird der resultierende Aerosolfluß durch den Sättiger S geführt, wo das Trägergas mit Wasser, Acetonitril (CH₃CN) oder einer Mischung aus Acetonitril und Wasser, im weiteren als Arbeitsflüssigkeit bezeichnet, gesättigt wird. Das Aerosol fließt hierbei im Gegenstrom durch einen rohrförmigen Hohlraum im Zentrum einer Polyurethanschaumsäule, die mit einem Vorrat an Arbeitsflüssigkeit in Verbindung steht.

Die Arbeitsflüssigkeit verdampft hierbei von den Innenseiten des rohrförmigen Hohlraumes und diffundiert in das strömende Aerosol. Die Menge der verdampften Arbeitsflüssigkeit wird über die Temperatur des Sättigers S, d.h. über die Temperatur des den Sättiger S umgebenden, thermostatisierten Wasserbades gesteuert. Wasser, Acetonitril oder ein Gemisch aus beiden dienen als Eluenten für die später zur Analyse verwendete HPLC.

In der nachgeschalteten Kondensationskammer K wird das gesättigte Aerosol-Arbeitsflüssigkeits-Dampf-Gemisch durch den Kontakt mit den umgebenden Kondensatorwänden abgekühlt. Diese Temperaturabsenkung führt zur Übersättigung des Aerosol-Arbeitsflüssigkeits-Dampf-Gemisches und damit zur Kondensation des Dampfes auf den Partikeln und somit zum definierten Anwachsen der Partikel. Der Durchmesser der "gewachsenen" Partikel am Ausgang der Kondensationskammer K läßt sich über die Parameter T_{*Sat*}, T_{*Kon*} (Absoluttemperaturen von Sättiger S und Kondensationskammer K) und der Strömungs-geschwindigkeit *v* des Trägergases bei gegebener Dimensionierung des Systems kontrollieren. Die Temperatur der Kondensationskammerwände wird hier über ein thermostatisiertes Wasserbad eingestellt.

Sind die Partikel in der Arbeitsflüssigkeit löslich, dann formen sich Tropfen aus der Arbeitsflüssigkeit, die die gelösten Substanzen beinhalten. In der Arbeitsflüssigkeit unlösliche Partikel werden mit der Arbeitsflüssigkeit beschichtet.

Die Übersättigung der Arbeitsflüssigkeit in der Kondensationskammer K kann auch mittels Druckabsenkung erfolgen.

In einem dritten Abschnitt des Verfahrens wird der Übergang der Partikel in die flüssige Phase vorgenommen. Unlösliche Aerosolpartikel bilden ein Hydrosol, bestehend aus den Aerosolpartikeln und der Arbeitsflüssigkeit.

Am Ausgang der Kondensationskammer K ist die Vorrichtung D zur Einbringung der angewachsenen Aerosolpartikel in eine Analysevorrichtung AV angeordnet. Diese Vorrichtung D besteht beispielsweise aus einer fokussierenden Düse, die den Partikelstrom in eine Kapillare fokussiert. Je nach Anordnung und Dimensionierung von Düse und Kapillare (Durchmesser, Abstand voneinander, Steilheitsgrad des Düsenkonusses) sowie in Abhängigkeit von den Arbeitsbedingungen wie Druck und Strömungsgeschwindigkeit zeigt die Vorrichtung D als Fokussierungseinheit eine eindeutige Abscheidecharakteristik, d.h., der untere Abscheide-durchmesser kann so festgelegt werden, daß die in die Düse eintretenden Partikel in der Kapillare abgeschieden werden.

Die Vorrichtung D kann auch aus mehreren Düsen gebildet sein, mit denen die Aerosolpartikel auf mehrere Kapillaren fokussiert werden.

Die Kapillare führt im vorliegenden Ausführungsbeispiel direkt zur Analyseeinheit AV, die aus einer Trenneinheit TE und einem Detektor DR gebildet wird.

Die Trenneinheit TE, zum Beispiel ein High Pressure Liquid Chromatograph (HPLC) oder Gas-Chromatograph, und der Detektor DR, zum Beispiel ein Massenspektrometer (zum Beispiel ein kommerziell verfügbares Ion-Trap-Massenspektrometer), sind wahlweise durch eine Elektrospray- oder Atmospheric Pressure Chemical Ionization-Quelle (APCI) miteinander gekoppelt, welche die Analysesubstanz dem Massenspektrometer als Detektor DR in ionisierter Form zuführt.

Als weiteres chromatographisches Trennverfahren kann die Kapillarzonen-Elektrophorese eingesetzt werden, die besonders für ionische Komponenten, z.B. Carbonsäuren, geeignet ist.

Die Erfindung ist nicht auf das hier beschriebene Ausführungsbeispiel beschränkt. Vielmehr ist es möglich, durch Kombination und Modifikation der beschriebenen Merkmale weitere Ausführungsvarianten zu realisieren, ohne den Rahmen der Erfindung zu verlassen.

## Patentansprüche

1. Verfahren zur größenaufgelösten chemischen und/oder physikalischen Bestimmung von Aerosolpartikeln in Echtzeit mit folgenden Verfahrensschritten:
- Selektion der zu analysierenden Aerosolpartikel nach ihrer Größe mittels einer geeigneten Vorrichtung,
- einer nachfolgenden Vergrößerung der selektierten Aerosolpartikel im luftgetragenen Zustand, wobei ein Trägergas des vorliegenden quasi-monodispersen Aerosols in einem Sättiger (S) mit dem Dampf einer für die anschließende Analyse geeigneten Arbeitsflüssigkeit gesättigt und nachfolgend in einer Kondensationskammer (K) übersättigt wird, was zur Kondensation der Arbeitsflüssigkeit auf den Aerosolpartikeln und damit zum Anwachsen der Partikel führt,
**gekennzeichnet durch**
- einen nachfolgenden Übergang der vergrößerten Aerosolpartikel in die flüssige Phase, und
- eine nachfolgende Analyse chemischer und/oder physikalischer Eigenschaften der abgeschiedenen Aerosolpartikel mittels einer chromatographischen Trenneinheit (TE) und eines Detektors (DR).

2. Verfahren nach Anspruch 1,
**dadurch gekennzeichnet, dass**
als chromatographisches Verfahren die High Pressure Liquid Chromatographie, die Gas-Chromatographie oder die Kapillarzonen-Elektrophorese verwendet wird.

3. Verfahren nach einem der vorhergehenden Ansprüche,
**dadurch gekennzeichnet, dass**
die Selektion der zu analysierenden Aerosolpartikel nach ihrer Größe mittels eines differentiellen Mobilitätsanalysators (DMA) oder mittels eines Impaktors in Kombination mit einem virtuellen Impaktor durchgeführt wird.

4. Verfahren nach einem der vorhergehenden Ansprüche,
**dadurch gekennzeichnet, dass**
die vergrößerten Aerosolpartikel in eine Kapillare abgeschieden werden.

5. Verfahren nach Anspruch 1,
**dadurch gekennzeichnet, dass**
die Aerosolpartikel in der mit gewünschten, definierten Eigenschaften versehenen Arbeitsflüssigkeit unlöslich sind und bei der Vergrößerung mit dieser beschichtet werden.

6. Verfahren nach Anspruch 1,
**dadurch gekennzeichnet, dass**
die Aerosolpartikel in der Arbeitsflüssigkeit löslich sind und sich bei der Vergrößerung Tropfen aus der Arbeitsflüssigkeit bilden, welche die gelösten Substanzen enthalten.

7. Vorrichtung zur größenaufgelösten chemischen und/oder physikalischen Bestimmung von Aerosolpartikeln in Echtzeit, aufweisend:
- eine Vorrichtung zur Selektierung der Partikelgröße der Aerosolpartikel,
- einen Sättiger (S) zur Anreicherung des Trägergases mit einer Arbeitsflüssigkeit, der mit der Vorrichtung zur Selektierung der Partikelgröße verbunden ist,
- eine mit dem Sättiger (S) verbundene Kondensationskammer (K) zur Kondensation der Arbeitsflüssigkeit auf die Aerosolpartikel zum Anwachsen der Aerosolpartikel,
- eine Vorrichtung (D) zur Überführung der vergrößerten Aerosolpartikel in die flüssige Phase,
**gekennzeichnet durch**
eine Analysevorrichtung (AV) zur chemischen und/oder physikalischen Analyse der abgeschiedenen Aerosolpartikel mit einer chromatographischen Trenneinheit (TE) und einem Detektor (DR).

8. Vorrichtung nach Anspruch 7,
**dadurch gekennzeichnet, daß**
die Vorrichtung (D) zur Abscheidung der angewachsenen Aerosolpartikel aus mindestens einer Düse, die auf mindestens eine Kapillare fokussiert, gebildet ist.

9. Vorrichtung nach Anspruch 7,
**dadurch gekennzeichnet, dass**
die Trenneinheit (TE) ein High Pressure Liquid Chromatograph, ein Gas-Chromatograph oder eine Vorrichtung zur Kapillarzonen-Elektrophorese ist.

10. Vorrichtung nach Anspruch 7,
**dadurch gekennzeichnet, dass**
der Detektor (DR) ein Massenspektrometer ist.

11. Vorrichtung nach Anspruch 7,
**dadurch gekennzeichnet, dass**
zwischen der Trenneinheit (TE) und dem Detektor (DR) eine Elektrosprayquelle oder eine Atmospheric Pressure Chemical Ionization Quelle angeordnet ist, welche die Analysesubstanz dem Detektor (DR) in ionisierter Form zuführt.

## Claims

1. A method for the size-resolved chemical and/or physical real-time determination of aerosol particles, using the following process steps:
- selection according to size of aerosol particles to be analyzed, using a suitable device,
- subsequent enlargement of the selected aerosol particles in airborne state, wherein a carrier gas of the present quasi-monodisperse aerosol is saturated in a saturator (S) with vapor of an operating fluid suitable for subsequent analysis and subsequently supersaturated in a condensation chamber (K), resulting in condensation of the operating fluid on the aerosol particles and consequently in growth of the particles,
**characterized by**
- subsequent transition of the enlarged aerosol particles into the liquid phase, and
- subsequent analysis of chemical and/or physical properties of the deposited aerosol particles by means of a chromatographic separation unit (TE) and a detector (DR).

2. The method according to claim 1,
**characterized in that**
high-pressure liquid chromatography, gas chromatography or capillary zone electrophoresis is used as chromatographic procedure.

3. The method according to any of the preceding claims,
**characterized in that**
the selection according to size of the aerosol particles to be analyzed is performed by means of a differential mobility analyzer (DMA) or by means of an impactor in combination with a virtual impactor.

4. The method according to any of the preceding claims,
**characterized in that**
the enlarged aerosol particles are deposited in a capillary.

5. The method according to claim 1,
**characterized in that**
the aerosol particles are insoluble in the operating fluid provided with desirable well-defined properties and coated with the latter during enlargement.

6. The method according to claim 1,
**characterized in that**
the aerosol particles are soluble in the operating fluid, drops of operating fluid being formed during enlargement, which include the dissolved substances.

7. A device for the size-resolved chemical and/or physical real-time determination of aerosol particles, comprising:
- a device for selecting the particle size of the aerosol particles,
- a saturator (S) used to enrich the carrier gas with an operating fluid and connected with the device for selecting the particle size,
- a condensation chamber (K) in communication with the saturator (S), for condensing the operating fluid on the aerosol particles to cause growth of the aerosol particles,
- a device (D) for transferring the enlarged aerosol particles into the liquid phase,
**characterized by**
an analytical device (AV) for the chemical and/or physical analysis of the deposited aerosol particles, comprising a chromatographic separation unit (TE) and a detector (DR).

8. The device according to claim 7,
**characterized in that**
the device (D) for the deposition of the grown aerosol particles is constituted of at least one nozzle focusing on at least one capillary.

9. The device according to claim 7,
**characterized in that**
the separation unit (TE) is a high-pressure liquid chromatograph, a gas chromatograph, or a capillary zone electrophoretic device.

10. The device according to claim 7,
**characterized in that**
the detector (DR) is a mass spectrometer.

11. The device according to claim 7,
**characterized in that**
the separation unit (TE) and detector (DR) have an electro-spray source or an atmospheric pressure chemical ionization source arranged therebetween which supplies substance for analysis to the detector (DR) in ionized form.

## Revendications

1. Procédé d'analyse chimique et/ou physique de particules d'aérosol résolue en fonction de la taille en temps réel comprenant les étapes suivantes:
- sélectionner les particules d'aérosol à analyser selon leur taille à l'aide d'un dispositif approprié,
- amplifier ensuite les particules d'aérosol sélectionnées à l'état porté par l'air, moyennant quoi on sature un gaz vecteur de l'aérosol présent quasi-monodispersé dans un saturateur (S) avec la vapeur d'un liquide de travail approprié pour l'analyse suivante et on le sursature ensuite dans une chambre de condensation (K), ce qui conduit à une condensation du liquide de travail sur les particules d'aérosol et ainsi à augmenter la taille des particules,
**caractérisé par**
- un transfert suivant des particules d'aérosol agrandies dans la phase liquide, et
- une analyse suivante des propriétés chimiques et/ou physiques des particules d'aérosol séparées au moyen d'une unité de séparation chromatographique (TE) et d'un détecteur (DR).

2. Procédé selon la revendication 1,
**caractérisé en ce**
**qu'**on utilise, à titre de méthode chromatographique, la chromatographie liquide à haute pression, la chromatographie en phase gazeuse ou l'électrophorèse à zones capillaires.

3. Procédé selon l'une des revendications précédentes,
**caractérisé en ce**
**qu'**on effectue la sélection des particules d'aérosol à analyser selon leur taille au moyen d'un analyseur de mobilité différentiel (DMA) ou au moyen d'un impacteur combiné à un impacteur virtuel.

4. Procédé selon l'une des revendications précédentes,
**caractérisé en ce**
**qu'**on sépare les particules d'aérosol agrandies dans un capillaire.

5. Procédé selon la revendication 1,
**caractérisé en ce**
**que** les particules de l'aérosol sont insolubles dans le liquide de travail ayant des propriétés définies et souhaitées et sont recouvertes par celui-ci lors du processus d'agrandissement des particules.

6. Procédé selon la revendication 1,
**caractérisé en ce**
**que** les particules de l'aérosol sont solubles dans le liquide de travail et des gouttes du liquide de travail se forment lors de l'agrandissement, lesquelles contiennent les substances dissoutes.

7. Dispositif d'analyse chimique et/ou physique résolue en fonction de la taille de particules d'aérosol en temps réel, comprenant :
- un dispositif de sélection de la grandeur des particules des particules d'aérosol,
- un saturateur (S) destiné à concentrer le gaz vecteur avec un liquide de travail, qui est relié au dispositif de sélection de la grandeur des particules,
- une chambre de condensation (K) reliée au saturateur (S) destinée à condenser le liquide de travail sur les particules d'aérosol pour amplifier la taille des particules d'aérosol, et
- un dispositif de transfert des particules d'aérosol augmentées en phase liquide,
**caractérisé par**
un dispositif d'analyse (AV) destiné à l'analyse chimique et/ou physique des particules d'aérosol séparées, comportant une unité de séparation chromatographique (TE) et un détecteur (DR).

8. Dispositif selon la revendication 7,
**caractérisé en ce que**
le dispositif (D) de séparation des particules d'aérosol amplifiées est constitué d'au moins un injecteur, qui est focalisé sur au moins un capillaire.

9. Dispositif selon la revendication 7,
**caractérisé en ce que**
l'unité de séparation (TE) est un chromatographe en phase liquide à haute pression, un chromatographe en phase gazeuse ou un dispositif d'électrophorèse à zones capillaires.

10. Dispositif selon la revendication 7,
**caractérisé en ce que**
le détecteur (DR) est un spectromètre de masse.

11. Dispositif selon la revendication 7,
**caractérisé en ce**
**qu'**entre l'unité de séparation (TE) et le détecteur (DR), est disposée une source d'électrospray ou une source d'ionisation chimique à pression atmosphérique, qui introduit la substance à analyser vers le détecteur (DR) sous une forme ionisée.
